# EUROPEAN PATENT APPLICATION

(11) **EP 1 659 150 A1**
(43) Date of publication of application: **24.05.2006**
(21) Application number: 05024747.7
(22) Date of filing: 12.11.2005
(51) Int. Cl.: C08L 15/00, C08L 23/22, C08L 5/14

(54) **Peroxide curable rubber composition comprising HNBR**

(30) Priority: 18.11.2004 CA 2487744
(71) Applicant: Lanxess Inc., Sarnia, Ontario N7T 7M2 (CA)
(72) Inventor: Resendes, Rui, Dr., N7S 4H7, Sarnia Ontario (CA); von Hellens, Walter, Prof. Dr., Brights Grove Ontario (CA)
(74) Representative: Zobel, Manfred

(57) **Abstract**

A peroxide cured rubber composition comprising a first peroxide curable rubber compound comprising a hydrogenated nitrile-butadiene rubber compound (HNBR); a second peroxide curable rubber compound comprising repeating units derived from at least one isoolefin monomer, more than 3.0 mol% of repeating units derived from at least one multiolefin monomer, and a gel content of less than 5.0 wt%; and, repeating units derived from at least one multiolefin cross-linking agent. In a preferred embodiment, the second peroxide curable rubber comprises a peroxide curable butyl rubber (IIR) with a high isoprene content and a low gel content. The composition is particularly useful in the making of hydrocarbon resistant seals. A method of producing the composition is also disclosed, along with a shaped article made from the composition.

## Description

### Field of the Invention

The invention relates to a peroxide curable rubber composition comprising hydrogenated nitrile butadiene rubber (HNBR) and a peroxide curable rubber compound. Particularly, the invention relates to a composition wherein the peroxide curable rubber compound comprises repeating units derived from at least one isoolefin monomer, more than 3.0 mol% of repeating units derived from at least one multiolefin monomer, and a gel content of less than 5.0 wt%; for example, a peroxide curable high-isoprene butyl rubber.

### Background of the Invention

The metal-catalyzed hydrogenation of BD-co-ACN results in the formation of the essentially saturated co-polymer hydrogenated nitrile butadiene rubber (HNBR, also known, for example, by the trade-name Therban™). The low residual levels of backbone un-saturation results in enhanced heat aging resistance. When peroxide cured, HNBR possesses excellent compression set. In addition, the presence of polar acrylonitrile groups along the polymer main chain impart a high level of oil resistance to formulations based on HNBR. For these reasons, one of the main applications for HNBR is in seals and gaskets.

However in certain applications (for example, in some seal compounds) it is desirable to improve upon the low temperature flexibility, gas impermeability, and/or high frequency dampening characteristics of HNBR. These improvements should preferably be achieved without compromising the compression set properties of HNBR.

Butyl rubber (IIR) is a co-polymer of an isoolefin and a relatively small amount of multiolefins, preferably conjugated multiolefins, as co-monomers. Commercial butyl rubbers typically comprise isobutylene as the isoolefin and not more than 2.5 mol% of isoprene as the conjugated multiolefin.

Butyl rubber is known for its excellent insulating and gas barrier properties. For this reason, this material is mainly used in tire inner liner formulations. It is important to note that the enhanced impermeability of IIR does not come at the expense of low temperature flexibility. In fact, the glass transition temperature (T_{g}) of IIR is ca. -65 °C. In addition, IIR possesses a low level of main chain unsaturation. For this reason, IIR is also well known for its resistance to high temperature aging. Recently, the favorable dynamic properties of IIR (high tan δ at 0 °C) have been incorporated into novel tread formulations (see, for example, CA 2,364,806).

The most common methods by which to cure IIR based compounds employ the use of sulfur in conjunction with organic accelerators. While the presence of oligo-sulfido crosslinks enhance the flex-to-fatigue properties of IIR based formulations, they have a negative effect on compression set.

As an alternative to sulfur, organic peroxides may be used in conjunction with a multiolefin cross-linking agent such as divinyl benzene (DVB) to cure butyl rubber. Peroxide curable butyl rubbers exhibit good compression set properties as compared with conventionally cured butyl rubbers. An example of a commercially available peroxide curable butyl rubber is Bayer XL-10000™ (see, for example, CA 817,939, US 2,781,334, US 2,729,626, US 2,671,774). However, this rubber has a high gel content (up to 50%) and a low multiolefin content (isoprene levels of less than 2%).

It has recently been discovered that it is possible to produce a peroxide curable butyl rubber having a low gel content and a high multiolefin content (see, for example, co-pending Canadian patent applications 2,418,884 and 2,458,741, the disclosures of which are hereby incorporated by reference). A high multiolefin content is desirable to achieve cross-linking of the polymer by peroxide.

Blending of HNBR with other rubbers is one available technique for achieving a novel rubber composition with the desired low temperature flexibility, gas impermeability, and/or high frequency damping characteristics. However, it is not possible to predict in advance which rubbers will impart the desired characteristics to the composition or the amount of the rubbers that are most preferred. A candidate for blending with HNBR should be peroxide curable, have a low gel content to simplify processing, and have a high multiolefin content to facilitate peroxide based cross-linking with the HNBR backbone; heretofore, a suitable candidate has been unavailable, particularly amongst butyl rubbers. As a result, the need still exists for a peroxide curable rubber composition comprising HNBR that has the previously described desirable characteristics.

### Summary of the Invention

According to an aspect of the invention, there is provided a peroxide cured rubber composition comprising: a first peroxide curable rubber compound comprising a hydrogenated nitrile-butadiene rubber compound (HNBR); a second peroxide curable rubber compound comprising repeating units derived from at least one isoolefin monomer, more than 3.0 mol% of repeating units derived from at least one multiolefin monomer, and a gel content of less than 5.0 wt%; and, repeating units derived from at least one multiolefin cross-linking agent.

According to another aspect of the invention, there is provided a method of preparing a peroxide cured rubber composition comprising: providing a first peroxide curable rubber compound comprising a first peroxide curable rubber compound comprising a hydrogenated nitrile-butadiene rubber compound (HNBR); a second peroxide curable rubber compound comprising repeating units derived from at least one isoolefin monomer, more than 3.0 mol% of repeating units derived from at least one multiolefin monomer, and a gel content of less than 5.0 wt%; mixing the first and second peroxide curable rubber compounds to form a substantially homogeneous mechanical blend; adding an organic peroxide and a multiolefin cross-linking agent to the blend; mixing the blend at a first temperature for a first pre-determined time period; and, curing the blend at a second temperature for a second pre-determined time period to form repeating units derived from the at least one multiolefin cross-linking agent.

According to yet another aspect of the invention, there is provided a shaped article comprising a peroxide cured rubber composition comprising: a first peroxide curable rubber compound comprising a hydrogenated nitrile-butadiene rubber compound (HNBR); a second peroxide curable rubber compound comprising repeating units derived from at least one isoolefin monomer, more than 3.0 mol% of repeating units derived from at least one multiolefin monomer, and a gel content of less than 5.0 wt%; and, repeating units derived from at least one multiolefin cross-linking agent.

Further features of the invention will be described or will become apparent in the course of the following detailed description.

### Brief Description of the Drawings

In order that the invention may be more clearly understood, preferred embodiments thereof will now be described in detail by way of example with reference to the accompanying figures, in which:
Fig. 1 illustrates the hardness, ultimate tensile strength and modulus at 200% elongation of compositions according to the present invention in comparison with HNBR and a second peroxide curable rubber compound;
Fig. 2 illustrates the low temperature flexibility of compositions according to the present invention in comparison with HNBR and a second peroxide curable rubber compound;
Fig. 3 illustrates the compression set of compositions according to the present invention in comparison with HNBR and a second peroxide curable rubber compound;
Fig. 4 illustrates the gas impermeability of compositions according to the present invention in comparison with HNBR and a second peroxide curable rubber compound; and,
Fig. 5 illustrates the high frequency damping characteristics of compositions according to the present invention in comparison with HNBR and a second peroxide curable rubber compound.

### Detailed Description of Preferred Embodiments

The peroxide curable rubber composition according to the present invention comprises a first peroxide curable rubber compound comprising HNBR.

The expression HNBR is here to be understood as meaning simple HNBR rubbers as well as carboxylated HNBR rubbers (HXNBR) and also hydrogenated HNBR co-polymers of butadiene, acrylonitrile and further acrylic or vinyl monomers. The nitrile-butadiene rubber used to produce the HNBR rubber preferably has a random distribution of the monomer units. Suitable monomers for the production of HNBR rubber are all unsaturated monomers known to the person skilled in the art that are copolymerizable in emulsion with acrylonitrile and butadiene. Preference is give to copolymers based on acyrlonitrile and butadiene and on acrylonitrile, butadiene, vinyl monomers and acrylate or methacrylate esters and their free acids.

The acrylonitrile content of the HNBR rubber may be in the range of 20 to 50%, preferably 30 to 55%, more preferably 34 to 43%.

Although any HNBR rubber may be used, preferred HNBR rubbers are highly hydrogenated, otherwise known as fully saturated, nitrile butadiene or nitrile butadiene copolymer rubbers. The HNBR rubber preferably has a content of double bonds that is less than 55 double bonds per 1000 carbon atoms, more preferably less than 40 per 1000 carbon atoms, even more preferably less than 20 per 1000 carbon atoms, yet even more preferably less than 9 per 1000 carbon atoms, still more preferably in the range from 0.2 to 7 double bonds per 1000 carbon atoms.

There are several commercially available grades of Therban™ that are suitable for use in the composition of the present invention. For example, Therban™ A 3406, A 3407, A 3907, XN 532A (A 4307), A 4555 (VP KA 8832), are all suitable for use in the present invention. One preferred grade is Therban™ A 3406.

The partial and/or complete hydrogenation of a nitrile rubber (NR) is described in DE-A 2 539 132, DE-A 3 329 974, DE 3 056 008, DE-A 3 046 251, EP-A 111 412 and WO-A 01/77185. The HNBR rubber is prepared in solution, which is later converted into solid rubber.

The peroxide curable rubber composition according to the present invention further comprises a second peroxide curable rubber compound.

The second peroxide curable rubber compound used in the present invention is not limited to a special isoolefin. However, isoolefins within the range of from 4 to 16 carbon atoms, in particular 4-7 carbon atoms, such as isobutene, 2-methyl-1-butene, 3-methyl-1-butene, 2-methyl-2-butene, 4-methyl-1-pentene and mixtures thereof are preferred. Most preferred is isobutene.

The second peroxide curable rubber compound used in the present invention is not limited to a special multiolefin. Every multiolefin copolymerizable with the isoolefin known by the skilled in the art can be used. However, multiolefins within the range of from 4-14 carbon atoms, such as isoprene, butadiene, 2-methylbutadiene, 2,4-dimethylbutadiene, piperyline, 3-methyl-1,3-pentadiene, 2,4-hexadiene, 2-neopentylbutadiene, 2-methyl-1,5-hexadiene, 2,5-dimethyl-2,4-hexadiene, 2-methyl-1,4-pentadiene, 2-methyl-1,6-heptadiene, cyclopentadiene, methylcyclopentadiene, cyclohexadiene, 1-vinyl-cyclohexadiene and mixtures thereof, in particular conjugated dienes, are preferably used. Isoprene is particularly preferably used.

In the second peroxide curable rubber compound, β-pinene can also be used as a co-monomer for the isoolefin.

As optional monomers every monomer copolymerizable with the isoolefins and/or dienes known by the skilled in the art can be used. α-methyl styrene, p-methyl styrene, chlorostyrene, cyclopentadiene and methylcyclopentadiene are preferably used. Indene and other styrene derivatives may also be used in this invention.

The multiolefin content is greater than 3.0 mol%, preferably greater than 4.1 mol%, more preferably greater than 5.0 mol%, even more preferably greater than 6.0 mol%, yet even more preferably greater than 7.0 mol%, still more preferably about 7.5 mol%.

Preferably, the second peroxide curable rubber compound comprises in the range of from 80% to 95% by weight of at least one isoolefin monomer and in the range of from 4.0% to 20% by weight of at least one multiolefin monomer including β-pinene. More preferably, the monomer mixture comprises in the range of from 83% to 94% by weight of at least one isoolefin monomer and in the range of from 5.0% to 17% by weight of a multiolefin monomer or β-pinene. Most preferably, the monomer mixture comprises in the range of from 85% to 93% by weight of at least one isoolefin monomer and in the range of from 6.0% to 15% by weight of at least one multiolefin monomer, including β-pinene.

The weight average molecular weight, M_{w}, of the second peroxide curable rubber compound is preferably greater than 240 kg/mol, more preferably greater than 300 kg/mol, even more preferably greater than 500 kg/mol, yet even more preferably greater than 600 kg/mol.

The term "gel" is understood to denote a fraction of the polymer insoluble for 60 min in cyclohexane boiling under reflux. The gel content of the second peroxide curable rubber compound is less than 5.0 wt.%, preferably less than 3.0 wt.%, more preferably less than 1.0 wt%, even more preferably less than 0.1 wt%, yet even more preferably less than 0.05 wt%, still even more preferably less than 0.01 wt%.

Mooney viscosity is determined using ASTM test D1646 using a large rotor at 125 °C, a preheat phase of 1 min, and an analysis phase of 8 min (ML1+8 @ 125 °C) The Mooney viscosity of the second peroxide curable rubber compound is preferably at least 25 Mooney units, more preferably at least 30 Mooney units, even more preferably at least 35 Mooney units, yet even more preferably between 35 and 40 Mooney units.

There are preferably no organic nitro compounds or transition metals present in the second peroxide curable rubber compound.

The peroxide cured rubber composition further comprises repeating units derived from at least one multiolefin cross-linking agent. The term cross-linking agent is known to those skilled in the art and is understood to denote a compound that participates in chemical cross-linking between polymer chains in opposition to a monomer that will add to the chain. The cross-linking reaction is preferably initiated by a peroxide compound under conditions known in the art. Some easy preliminary tests will reveal if a compound will act as a cross-linking agent. The choice of the cross-linking agent is not particularly restricted. Preferably, the cross-linking comprises a multiolefinic hydrocarbon compound. Examples of these are norbornadiene, 2-isopropenylnorbornene, 2-vinyl-norbornene, 1,3,5-hexatriene, 2-phenyl-1,3-butadiene, divinylbenzene, diisopropenylbenzene, divinyltoluene, divinylxylene and C₁ to C₂₀ alkyl-substituted derivatives thereof. More preferably, the multiolefin crosslinking agent is divinylbenzene, diisopropenylbenzene, divinyltoluene, divinyl-xylene and C₁ to C₂₀ alkyl substituted derivatives thereof, and or mixtures of the compounds given. Most preferably the multiolefin crosslinking agent comprises divinylbenzene and diisopropenylbenzene.

The composition preferably comprises only small amounts of the repeating units derived from the multiolefin cross-linking agent. For example, the composition preferably comprises less than 1.2 mol%, more preferably less than 0.5 mol%, even more preferably less than 0.15 mol%, yet even more preferably about 0.07-0.11 mol% of repeating units derived from the multiolefin cross-linking agent.

The repeating units may be present in the second peroxide curable rubber compound. Preferably, the repeating units are present in an amount ranging from 0.01 % to 1% by weight of the second peroxide curable rubber compound.

The repeating units may be present in the composition as cross-links between the first and second peroxide curable rubber compounds. Generally, the first and second peroxide curable rubber compounds are not miscible in one another. During preparation of the composition, a mechanical blend of the first and second peroxide curable rubber compounds is formed. The cross-links may exist at the interfaces between the first and second peroxide curable rubber compounds and/or within the bulk phases of the first and second peroxide curable rubber compounds. Preferably, the repeating units are present in an amount ranging from 0.01 % to 3% by weight of the peroxide cured rubber composition.

The composition may include rubbers that are partially or fully chlorinated or brominated. Bromination or chlorination can be performed according to the procedures described in Rubber Technology, 3^{rd} Ed., Edited by Maurice Morton, Kluwer Academic Publishers, pp. 297 - 300 and references cited within this reference.

The composition may include any proportion of first and second rubber compounds. The composition preferably contains from 5 to 95 %, more preferably from 10 to 90%, yet more preferably from 20 to 80%, still more preferably from 30 to 70%, even more preferably from 40 to 60%, yet even more preferably from 45 to 55%, still even more preferably about 50% of the rubber compounds as first peroxide curable rubber compound with the balance of the rubber compounds taken up by the second peroxide curable rubber compound.

The composition is not necessarily limited to only two rubber compounds. For example, any number of the previously described variations of the first or second rubber compounds may be present in the composition.

There may be present in the composition additional components added during the formation or processing of the rubber compounds and/or during the formation or processing of the composition itself. For example, organic peroxides, coagents, cross-linking agents, reaction accelerators, vulcanizing accelerators, vulcanizing acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes, reinforcing agents, extenders, organic acids, inhibitors, metal oxides, and activators such as triethanolamine, polyethylene glycol, hexanetriol, etc., which are known to the rubber industry. The additional components are used in conventional amounts, which depend, *inter alia,* on their intended use. Conventional amounts are, for example, from 0.1 to 50 wt.%.

The invention is not limited to a special peroxide curing system. For example, inorganic or organic peroxides are suitable. Preferred are organic peroxides such as dialkylperoxides, ketalperoxides, aralkylperoxides, peroxide ethers, peroxide esters, such as di-tert.-butylperoxide, bis-(tert.-butylperoxyisopropyl)-benzol, dicumylperoxide, 2,5-dimethyl-2,5-di(tert.-butylperoxy)-hexane, 2,5-dimethyl-2,5-di(tert.-butylperoxy)-hexene-(3), 1,1-bis-(tert.-butylperoxy)-3,3,5-trimethyl-cyclohexane, benzoylperoxide, tert.-butylcumylperoxide and tert.-butylperbenzoate. A variety of different organic peroxides can be used in the invention; for example, different organic peroxides may be used in the curing of the peroxide curable rubber compound or compounds and in the curing of the composition itself. A combination of peroxides may also be used. Peroxides might be applied advantageously in a polymer-bound form. Suitable systems are commercially available, such as Polydispersion T(VC) D-40 P from Rhein Chemie Rheinau GmbH, D (= polymerbound di-tert.-butylperoxyisopropylbenzene). One preferred commercially available organic peroxide for use in curing the composition is Di-Cup® 40 C (dicumyl peroxide, 40% active, from Hercules Inc.) Usually the amount of peroxide is in the range of from 1 to 10 phr (phr = per hundred rubber), preferably from 1 to 5 phr.

Coagents may be incorporated with the peroxides to increase the state of the cure. The coagents advantageously improve resistance to temperature and compression set when used as part of the curing process. Suitable coagents include triallyl isocyanurate, 1,2-polybutadiene, N,N'-m-phenylene dimaleimide, and trimethylolpropane trimethacrylate. Other suitable coagents are known to persons skilled in the art. One preferred commercially available coagent for use in curing the composition is HVA® # 2 (N,N'-m-phenylene dimaleimide, DuPont Dow Elastomers, Inc.)

Anti-oxidants may be incorporated in the composition to increase its resistance to aging. An anti-oxidant should be selected that does not overly affect elongation and compression set properties of the composition. Suitable anti-oxidants include zinc methylmercaptobenzimidazole and styrenated diphenyl amine. These anti-oxidants are commercially available, for example, as Vulkanox® ZMB 2 and Vulkanox® DDA, respectively. Other suitable anti-oxidants are know to persons skilled in the art. Preferably, anti-oxidants are used in an amount of between 0.2 phr and 1.5 phr. More preferably, a combination of zinc methylmercaptobenzimidazole in an amount of about 0.4 phr and styrenated diphenyl amine in an amount of about 1.1 phr are used.

The composition preferably has a Shore A hardness of between 56 and 68, an ultimate tensile strength of between 11.5 and 21.1 MPa, and a modulus at 200% elongation of between 6.44 and 13.2 MPa. Low temperature flexibility, expressed using T10 values (temperature at which the relative modulus is ten times greater than that measured at 23 °C) range from -26.2 to -49.3 °C. Compression set after 22h at 100 °C ranges from 13.5 to 21.3 % and at 70h from 16.0 to 24.2 %. Gas permeability ranges from 3.7 x 10⁻⁸ to 3.7 x 10⁻⁷ cm²/atm sec, preferably from 3.7 x 10⁻⁸ to 7.2 × 10⁻⁸ cm²/atm sec.

In a preferred embodiment, the composition according to the present invention comprises 40-60% HNBR by weight of the rubber with the balance of the rubber being butyl rubber (IIR) having an isoolefin comprising isobutene and a multiolefin comprising isoprene in an amount of between 3.0 and 7.5 mol% with a multiolefin cross-linking agent comprising divinyl benzene (DVB). Also present in the composition may be certain additional components, such as carbon black, zinc oxide, waxes, antioxidants such as zinc methylmercaptobenzimidazole and styrenated diphenyl amine, and/or residual organic peroxides and coagents, such as dicumyl peroxide and N,N'-m-phenylene dimaleimide.

A process for making a composition according to the present invention involves providing the first and second peroxide curable rubber compounds as uncured rubber particles having a viscosity of 25-90 Mooney units. The rubber compounds are then preferably mixed until a substantially homogeneous mechanical blend is created. An organic peroxide and a multiolefin cross-linking agent are then added to the blend. A coagent and/or an antioxidant may also optionally be added to the blend. Other additional components, such as carbon black and zinc oxide, may also optionally be added to the blend. The blend is then mixed at a first temperature for a first pre-determined time period.

Any suitable mixer may be used for creating the blend. Examples of suitable mixers include internal mixers, such as a Banbury mixer, or a Haake or Brabender miniature internal mixer. Other suitable types of mixers include roll mill mixers and extruders. A roll mill mixer is preferred for batch operation. Extruders are generally preferred for continuous operation and permit shorter mixing times overall. Mixing can be performed in two or more stages, and the mixing can be performed using different types of apparatus in each stage.

A suitable first temperature is selected to ensure good mixing and dispersion of the various ingredients in the blend. Care should be taken not to select a first mixing temperature that results in the blend becoming too hot and scorching, which leads to undesirable pre-crosslinking of the compounds during the mixing stage. This first temperature mixing stage is sometimes referred to in the art as heat-treating. Preferably, a first temperature of less than 100 °C is selected, more preferably less than 50 °C, even more preferably from 25 to 30 °C. The first temperature need not be continuous throughout the mixing and may increase in a step-wise or ramped manner.

The first pre-determined time period is chosen such that the blend has uniform temperature and consistency. Generally, the first pre-determined time period does not exceed one hour and is preferably less than 30 minutes, more preferably less than 15 minutes, even more preferably less than 12 minutes.

After mixing, the blend is cured. The blend may be removed from the mixing device and transferred to a curing device for curing. A waiting period may be employed between mixing and curing of the blend, or the mixing and curing operations may be performed continuously. Curing is usually performed in conjunction with pressure and temperature in a suitable curing device, for example an electric press. The curing device is selected to accommodate the higher temperatures used during curing. Curing may be performed in several stages, with different mixing apparatus, mixing conditions, mixing times, and/or temperature conditions in each stage.

Curing is preferably performed with a second temperature in the range of from 75 to 200 °C, preferably 100-180 °C, more preferably 130-160 °C. The pressure applied by the press is sufficient to cause the blend to flow into a suitably shaped mold.

Curing is performed for a second pre-determined amount of time. The curing operation is preferably conducted for less than one hour, preferably less than 30 minutes, more preferably less than 15 minutes, even more preferably less than 12 minutes, still more preferably about 10 minutes.

In a preferred embodiment of a process according to the present invention, the first peroxide curable rubber comprises HNBR, the second peroxide curable rubber compound comprises IIR, the organic peroxide comprises dicumyl peroxide in an amount of about 1-5 phr, the co-agent comprises N,N'-m-phenylene dimaleimide in an amount of about 3-4 phr, the anti-oxidant comprises zinc methylmercaptobenzimidazole in an amount of about 0.4 phr and styrenated diphenyl amine in an amount of about 1.1 phr, the blend is mixed at a first temperature of 25-30 °C increasing to about 100 °C for a first pre-determined time period of about 10-12 minutes, preferably in a roll mill mixer banded with a tight nip, then cured at a temperature of 130-160 °C for a period of about 8-10 minutes in a suitably shaped mold.

A variety of shaped articles can be made using the composition according to the present invention. The composition is particularly useful in making seals and gaskets, especially when used in hydrocarbon environments. Shaped articles can include both static seals, such as gaskets, O-rings, washers, dust caps, etc. and dynamic seals, such as pump seals, bearing seals, shaft seals, stators, etc. In general, any shaped article that is normally made from HNBR can be made from the composition according to the present invention.

### Experimental

Polymer unsaturation was determined through ¹H NMR spectroscopy with the use of a Bruker 500 MHz NMR Spectrometer. NMR samples used to determine isoprene content were prepared in CDCl₃. Microstructure information was calculated with the use of previously established integration methods. Peak shifts were referenced to a TMS internal standard.

Mixing was accomplished with the use of a 6" x 12" two roll mill.

Cure characteristics were determined with a Moving Die Rheometer (MDR) test carried out according to ASTM standard D-5289 on a Monsanto MDR 200 (E). The upper disc oscillated though a small arc of 1 degree.

Curing was achieved with the use of an Electric Press equipped with an Allan-Bradley Programmable Controller.

An A-2 type durometer was used following ASTM D-2240 requirements for the hardness measurement. This stress strain data was generated at 23°C according to the requirements of ASTM D-412 Method A. Die C dumbbells cut from 2mm thick tensile sheets were used. Dumbbell samples (Die C) were cut from macro sheets cured for tc90+5 minutes at 160 °C.

Dynamic properties were determined by means of a GABO Eplexor tester. The test specimen is subjected to a small sinusoidal deformation at a particular frequency and the temperature is varied. The resulting stress and phase difference between the imposed deformation and the response are measured and recorded.

Permeability testing was carried out according to ASTM D1434.

T10 values (temperature at which the relative modulus is ten times greater than that measured at 23 °C) were determined with the use of a Elastocon Gehman Tester.

### Example 1: Preparation of a Second Peroxide Curable Rubber Compound

The following example illustrates the production of a novel grade of IIR possessing an isoprene content of up to 8.0 mol % and a Mooney viscosity (ML 1+8 @ 125 °C) between 35 and 40 MU, via a continuous process.

The monomer feed composition was comprised of 4.40 wt. % of isoprene (IP or IC5) and 25.7 wt. % of isobutene (IP or IC4). This mixed feed was introduced into the continuous polymerization reactor at a rate of 5900 kg/hour. In addition, DVB was introduced into the reactor at a rate of 5.4 to 6 kg/hour. Polymerization was initiated via the introduction of an AlCl₃/MeCl solution (0.23 wt% of AlCl₃ in MeCl) at a rate of 204 to 227 kg/hour. The internal temperature of the continuous reaction was maintained between -95 and -100 °C through the use of an evaporative cooling process. Following sufficient residence within the reactor, the newly formed polymer crumb was separated from the MeCl diluent with the use of an aqueous flash tank. At this point, ca. 1 wt. % of stearic acid was introduced into the polymer crumb. Prior to drying, 0.1 wt. % of Irganox® 1010 was added to the polymer. ¹H NMR analysis revealed the material to possess an isoprene content of 7.5 mol %.

### Examples 2 ― 8: Rubber Compositions According to the Invention

These examples were prepared according to the recipes given in Table 1 with the following mixing procedure, then cured in a suitable mold at 160 °C for 10 minutes. Note that, in Table 1, the percentages of first and second peroxide curable rubber compounds are indicated by weight of rubber compounds only, whereas the other constituents are indicated on the basis of the total weight of the composition.

### Mixing Procedure:

### Stage 1

Mixer: 6" x 12" mill, Roll Temperature = 30 °C
i) t = 0 min : add first and second peroxide curable rubber compounds
ii) t = 4 min : add additives - carbon black NP550 and ZnO
iii) t = 8 min : add waxes and anti-oxidant - Vulkanox® ZMB 2 and Vulkanox® DDA
iv) t = 10 min : add DiCup® 40 C
v) t = 11 min : add HVA® #2
vi) t = 12 min : dump

### Stage 2

Mixer: 6" x 12" mill, Roll Temperature = 100 °C
i) Band compound with a tight nip for 10 minutes

**Table 1: Composition Formulations**

| | **Ex. 2** | **Ex. 3** | **Ex. 4** | **Ex.5 5** | **Ex. 6** | **Ex. 7** | **Ex. 8** |
|---|---|---|---|---|---|---|---|
| Second Compound (Ex.1) (% of rubber compounds only) | 100 | 80 | 60 | 50 | 40 | 20 | 0 |
| First Compound (Therban® A3406) (% of rubber compounds only) | 0 | 20 | 40 | 50 | 60 | 80 | 100 |
| Carbon Black N550 (wt%) | 50 | 50 | 50 | 50 | 50 | 50 | 50 |
| ZnO Kadox® 920 (wt%) | 0 | 0.6 | 1.2 | 1.5 | 1.8 | 2.4 | 3.0 |
| Carnauba Wax (wt%) | 2 | 2 | 2 | 2 | 2 | 2 | 2 |
| Vulkanox® 4020 LG (wt%) | 1 | 1 | 1 | 1 | 1 | 1 | 1 |
| Vulkanox® ZMB-2/C5 (wt%) | 1 | 1 | 1 | 1 | 1 | 1 | 1 |
| DiCup® 40C (phr) | 4 | 4.6 | 5.2 | 5.5 | 5.8 | 6.4 | 7.0 |
| HVA #2 (phr) | 3 | 3.2 | 3.4 | 3.5 | 3.6 | 3.8 | 4 |

**Table 2: Composition MDR Data**

| | **Ex. 2** | **Ex. 3** | **Ex. 4** | **Ex. 5** | **Ex. 6** | **Ex. 7** | **Ex.8** |
|---|---|---|---|---|---|---|---|
| Frequency (Hz) | 1.7 | 1.7 | 1.7 | 1.7 | 1.7 | 1.7 | 1.7 |
| Test Temperature (°C) | 160 | 160 | 160 | 160 | 160 | 160 | 160 |
| Degree Arc (°) | 1 | 1 | 1 | 1 | 1 | 1 | 1 |
| Test Duration (min) | 60 | 60 | 60 | 60 | 60 | 60 | 60 |
| Torque Range (dN.m) | 100 | 100 | 100 | 100 | 100 | 100 | 100 |
| Chart No. | 1480 | 1481 | 1482 | 1483 | 1484 | 1485 | 1486 |
| MH (dN.m) | 17.69 | 20.22 | 22.17 | 23.64 | 25.47 | 30.49 | 34.81 |
| ML (dN.m) | 2.21 | 2.85 | 2.7 | 2.73 | 2.66 | 2.64 | 2.55 |
| Delta MH-ML (dN.m) | 15.48 | 17.37 | 19.47 | 20.91 | 22.81 | 27.85 | 32.26 |
| ts 1 (min) | 1.68 | 1.26 | 1.26 | 1.26 | 1.32 | 1.32 | 1.44 |
| ts 2 (min) | 2.58 | 1.98 | 1.98 | 1.98 | 2.04 | 2.04 | 2.1 |
| t' 10 (min) | 2.13 | 1.78 | 1.92 | 2.05 | 2.26 | 2.51 | 2.79 |
| t' 25 (min) | 4.55 | 3.91 | 4.31 | 4.53 | 4.84 | 5.03 | 5.2 |
| t' 50 (min) | 10.11 | 8.63 | 9.2 | 9.35 | 9.65 | 9.51 | 9.53 |
| t' 90 (min) | 28.3 | 25.46 | 27.49 | 27.41 | 27.81 | 26.27 | 25.6 |
| t' 95 (min) | 35.8 | 34.87 | 36.58 | 36.09 | 36.36 | 34.01 | 33.16 |
| Delta t'50 - t'10 (min) | 7.98 | 6.85 | 7.28 | 7.3 | 7.39 | 7 | 6.74 |

**Table 3: Composition Stress Strain Data**

| | **Ex. 2** | **Ex. 3** | **Ex. 4** | **Ex. 5** | **Ex. 6** | **Ex. 7** | **Ex. 8** |
|---|---|---|---|---|---|---|---|
| Cure Time (min) | tc90+5 | tc90+5 | tc90+5 | tc90+5 | tc90+5 | tc90+5 | tc90+5 |
| Cure Temperature (°C) | 160 | 160 | 160 | 160 | 160 | 160 | 160 |
| Dumbell Type | Die C | Die C | Die C | Die C | Die C | Die C | Die C |
| Test Temperature (°C) | 23 | 23 | 23 | 23 | 23 | 23 | 23 |
| Hardness Shore A2 (pts.) | 56 | 62 | 65 | 65 | 66 | 67 | 68 |
| Ultimate Tensile (MPa) | 10:21 | 11.46 | 13.77 | 14.97 | 16.66 | 18.85 | 21.06 |
| Ultimate Elongation (%) | 321 | 230 | 261 | 274 | 333 | 341 | 376 |
| Stress @ 25 (MPa) | 0.762 | 1.29 | 1.43 | 1.5 | 1.54 | 1.47 | 1.58 |
| Stress @ 50 (MPa) | 1.07 | 2.14 | 2.31 | 2.43 | 2.33 | 2.26 | 2.32 |
| Stress @ 100 (MPa) | 2.08 | 4.51 | 4.96 | 5.33 | 4.92 | 4.87 | 4.96 |
| Stress @ 200 (MPa) | 6.44 | 9.88 | 11.01 | 11.81 | 11.46 | 12.34 | 13.22 |
| Stress @ 300 (MPa) | 9.87 | | | | 15.67 | 17.4 | 18.98 |

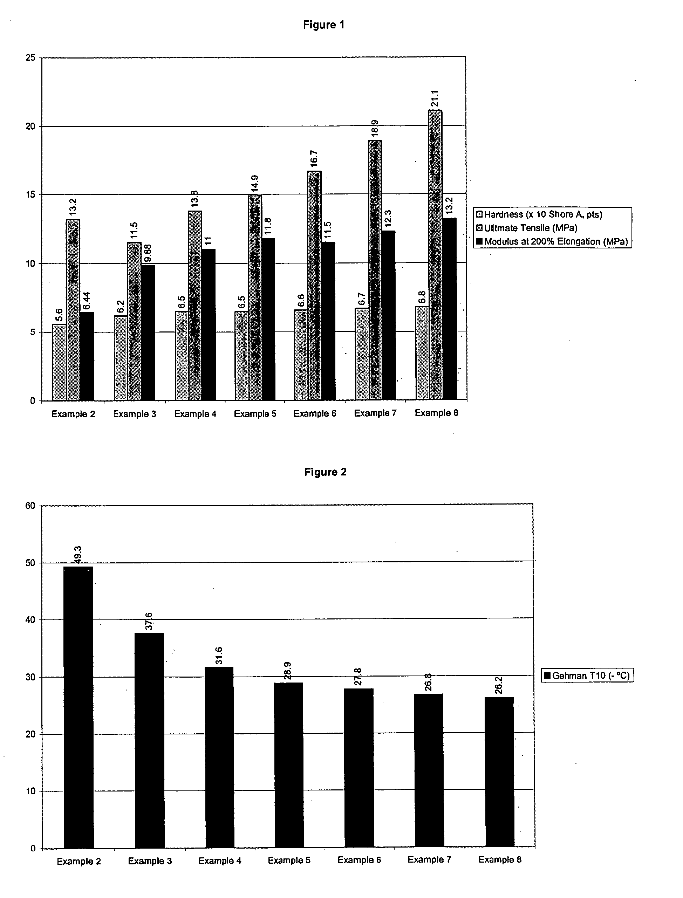

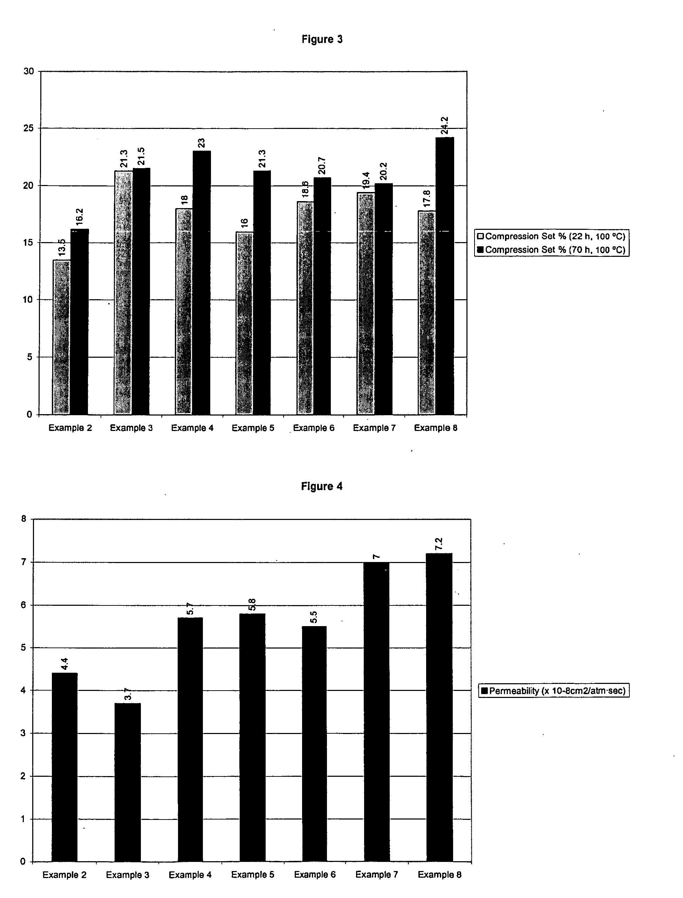

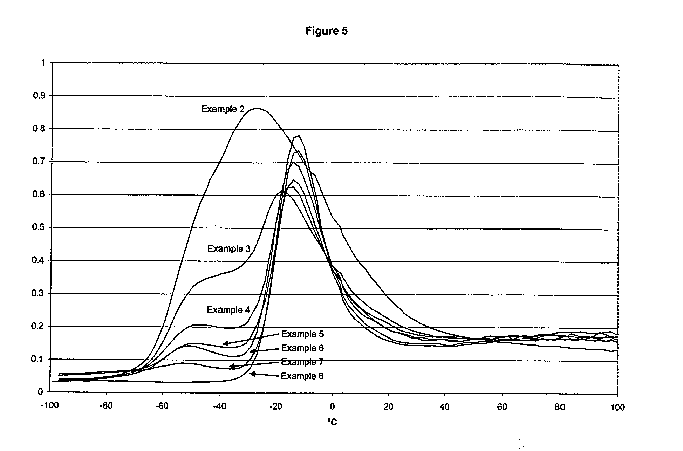

Referring to Figs. 1-5 and Tables 2-3, stress-strain analysis of the resulting compounds showed a slightly negative influence of IIR content on compound hardness. A similar negative effect was seen for the ultimate tensile strength and the modulus at 200 % elongation (Fig. 1, Table 3). However, a slight improvement in low temperature flexibility (as evidenced by the T10 values) was observed with increasing IIR content (Fig. 2). Importantly, this improvement did not come at the expense of the cured compound compression set. As can be seen from Fig. 3, the peroxide cured IIR compound (Example 2) possessed superior compression set when compared to the HNBR compound (Example 8). Surprisingly, it is possible to incorporate high levels of IIR into the blend and maintain a compression set value which is comparable to that measured for the HNBR control (Example 5) or slightly better (Examples 6, 7 at 22h). As would be expected, an increase in IIR content resulted in an improved level of impermeability (Fig. 4). Referring to Fig. 5, dynamic mechanical analysis revealed the characteristic butyl dampening signature superimposed onto the mechanical glass transition of the HNBR component. Comparing HNBR (Example 8) with HNBR-IIR blends (Examples 2-7), the butyl contribution to the hysteretic temperature profile provides superior dampening properties across a wide range of frequencies as compared with HNBR alone.

The data discussed above and depicted in Figures 1 - 5 are illustrated of several preferred embodiments of peroxide cured HNBR-IIR compositions. The compositions exhibited improved low temperature flexibility, improved impermeability and improved high frequency dampening as compared with the HNBR control, surprisingly without compromising the compression set or rendering a slight improvement thereto. These compositions are useful in a variety of applications, particularly seal and gasket applications.

From the foregoing, it will be seen that this invention is one well adapted to attain all the ends and objects hereinabove set forth together with other advantages which are obvious and which are inherent to the structure.

It will be understood that certain features and sub-combinations are of utility and may be employed without reference to other features and sub-combinations. This is contemplated by and is within the scope of the claims.

Since many possible embodiments may be made of the invention without departing from the scope thereof, it is to be understood that all matter herein set forth is to be interpreted as illustrative and not in a limiting sense.

## Claims

1. A peroxide cured rubber composition comprising:
a) a first peroxide curable rubber compound comprising a hydrogenated nitrile-butadiene rubber compound (HNBR);
b) a second peroxide curable rubber compound comprising repeating units derived from at least one isoolefin monomer, more than 3.0 mol% of repeating units derived from at least one multiolefin monomer, and a gel content of less than 5.0 wt%; and,
c) repeating units derived from at least one multiolefin cross-linking agent.

2. A composition according to claim 1, wherein the first peroxide curable rubber compound is present in an amount of 40-60% by weight of the composition and the second peroxide curable rubber compound is present in an amount of 60-40% by weight of the composition.

3. A composition according to claims 1 or 2, wherein the isoolefin monomer comprises isobutene, the multiolefin monomer comprises isoprene, and the multiolefin cross-linking agent comprises divinyl benzene.

4. A composition according to any one of claims 1 to 3, wherein the second peroxide curable rubber comprises about 7.5 mol% of repeating units derived from at least one multiolefin monomer.

5. A composition according to any one of claims 1 to 4, wherein the multiolefin cross-linking agent is present in an amount of 0.07-0.11 mol%.

6. A composition according to any one of claims 1 to 5, wherein the repeating units derived form the at least one multiolefin cross-linking agent are present in the second peroxide curable rubber compound.

7. A composition according to any one of claims 1 to 6, wherein the repeating units derived form the at least one multiolefin cross-linking agent are present in cross-links between the first and second peroxide curable rubber compounds.

8. A shaped article comprising a peroxide cured rubber composition comprising a first peroxide curable rubber compound comprising a hydrogenated nitrile-butadiene rubber compound (HNBR); a second peroxide curable rubber compound comprising repeating units derived from at least one isoolefin monomer, more than 3.0 mol% of repeating units derived from at least one multiolefin monomer, and a gel content of less than 5.0 wt%; and, repeating units derived from at least one multiolefin cross-linking agent.

9. A method of preparing a peroxide cured rubber composition comprising:
a) providing a first peroxide curable rubber compound comprising a first peroxide curable rubber compound comprising a hydrogenated nitrile-butadiene rubber compound (HNBR); a second peroxide curable rubber compound comprising repeating units derived from at least one isoolefin monomer, more than 3.0 mol% of repeating units derived from at least one multiolefin monomer, and a gel content of less than 5.0 wt%;
b) mixing the first and second peroxide curable rubber compounds to form a substantially homogeneous mechanical blend;
c) adding an organic peroxide and a multiolefin cross-linking agent to the blend;
d) mixing the blend at a first temperature for a first pre-determined time period; and,
e) curing the blend at a second temperature for a second pre-determined time period to form repeating units derived from the at least one multiolefin cross-linking agent.

10. The method according to claim 9, wherein step c) further comprises adding an anti-oxidant to the blend.

11. The method according to claims 9 or 10, wherein step c) further comprises adding a co-agent to the blend.

12. The method according to any one of claims 9 to 11, wherein the organic peroxide comprises dicumyl peroxide.

13. The method according to any one of claims 9 to 12, wherein the first temperature is about 100 °C.

14. The method according to any one of claims 9 to 13, wherein the second temperature is from about 130 °C to about 160 °C.

15. The method according to any one of claims 9 to 14, wherein the first and second peroxide curable rubber compounds are provided as uncured powders.

16. The method according to any one of claims 9 to 15, wherein the repeating units are formed as cross-links between the first and second peroxide curable rubber compounds.
